# EUROPEAN PATENT SPECIFICATION

(11) **EP 2 536 175 B1**
(45) Date of publication and mention of the grant of the patent: **13.08.2014**
(21) Application number: 11169767.8
(22) Date of filing: 14.06.2011
(51) Int. Cl.: H04W 4/18

(54) **Method, apparatus and computer program for a network node including a PCEF for establishing a user plane session**
Verfahren, Vorrichtung und Computerprogramm für einen Netzwerkknoten umfassend eine PCEF zum Aufbau einer User Plane - Sitzung
Procédé, appareil et logiciel pour un noeud de réseau comprenant une PCEF pour établir une session de plan d'utilisateur

(43) Date of publication of application: 19.12.2012
(73) Proprietor: Telefonaktiebolaget L M Ericsson (publ), 164 83 Stockholm (SE)
(72) Inventor: Perez Martinez, Alfonso de Jesus, 28008 Madrid (ES); Alvarez Dominguez, Rodrigo, 28016 Madrid (ES); Campo Giralte, Luis, 28750 Madrid (ES); Rubio Vidales, Jose, 28250 Torrelodones (Madrid) (ES)
(74) Representative: HOFFMANN EITLE

(56) References cited:
- WO-A2-2009/149341
- US-A1- 2010 235 877
- US-B1- 7 568 002
- "3rd Generation Partnership Project; Technical Specification Group Services and System Aspects; Study on Policy solutions and enhancements (Release 10)", 3GPP STANDARD; 3GPP TR 23.813, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 14 March 2011 (2011-03-14), pages 1-40, XP050476297, [retrieved on 2011-03-14]
- China Mobile, Huawei, ZTE: "Add new application types and new application scenarios to PCC,S2-072717", 3GPP TSG SA WG2 Architecture S2#58, 19 June 2007 (2007-06-19), XP002667459, Retrieved from the Internet: URL:http://www.3gpp.org/ftp/tsg_sa/WG2_Arc h/TSGS2_58_Orlando/Docs/S2-072717.zip

## Description

### [Technical Field]

The present invention relates to methods, apparatuses and computer programs involved in the process of controlling the delivery of contents to end users. The invention may for example be used for enabling enhanced filtering of unwanted advertisements transferred when a user requests content from the Internet. The invention may also be used, for example, for enabling enhanced parental control of Internet usage.

### [Background]

The Internet enables users to access services and information, and has become central to modern lifestyle by offering worldwide services, allowing users to contact people and to access and share information with virtually no limits. Users are continuously requesting and downloading contents, i.e. information in certain forms, from the Internet.

Downloading content often includes downloading, along with the requested content, some advertisements, also known as "ads", which are not always wanted or expected by the user. An advertisement might be useful if the user was searching for the product or service to which the advertisement relates, but the advertisement is usually ineffective if the user was not seeking the product or service to which the advertisement relates. In practice, transferring an advertisement along with, i.e. in addition to, a requested content consumes time, resources and bandwidth, and is also, therefore, environmentally unfriendly. Some web sites allow users to filter the ads to be received, but this filtering process can generally only be carried out once the user has accessed such web sites for the first time.

Furthermore, not only advertisements may be unwanted, some other contents may be inappropriate for viewing, especially by children. Children are more and more frequently accessing the Internet for educational purposes or for playing games. It means that, in the context of providing the means for an effective parental control, not only unwanted advertising campaigns should be blocked, but also contents as such should be under continuous surveillance.

A currently known approach for control of web usage is the so-called content filtering. Content filtering is typically offered by network providers, although popular operating systems recently implemented similar functions (such as for example Mac Filter and Win Filter). Content filtering is based on traffic routing through a filtering entity, which analyzes and filters the content. This filtering entity can run on users' computer or on a network proxy. Content analysis is usually performed by means of semantic analysis mechanisms, whereas content filtering is performed based on a configurable filtering profile, which allows supervisors to choose which categories and topics are allowed or forbidden.

That is, a variety of internet security products are available, in the context of which users can set filters for barring certain contents and specifically for barring ads. These internet security products generally work at the application layer level and may be installed in the user equipment, so that, even if they effectively solve the issue of not presenting the user with unwanted contents, they neither address nor solve the problems caused by transferring the unwanted contents. An installed internet security product is also consuming local resources on the user equipment. The more effective the internet security product is, the more local resources are consumed. Consequently, this sort of internet security products still presents the issue of consuming local resources and, besides, represents a yearly cost for user licences.

Some telecommunication operators offer to their subscribers a global internet security product, which may be one of the above-discussed internet security products, but installed in the telecommunication operator network. This sort of solution makes the user dependent on the telecommunication operator in relation to the installed internet security product. Indeed, migrating, from one internet security product to another, the user-specific filters, if allowed at all, may be difficult and expensive, since the internet security products are installed at the telecommunication operator network level. The difficultly in migrating the user filters is an issue, in particular, for enabling an effective parental control and, in general, for controlling downloaded contents.

The prior art also includes WO 2009/149341 A2, which relates to a GGSN having a PCEF and DPI function, wherein the PCEF enforces rules for the sessions handled by the GGSN and the DPI enables the GGSN to snoop the packets for details about various layers of the data packet.

It is desirable to provide methods, apparatuses and computer programs to improve the control of content delivery, notably by easing the user management thereof, and reducing the amount of transferred data, without excessively increasing the implementation and architecture complexity.

### [Summary]

To meet or at least partially meet the above-mentioned goals, methods, network nodes and computer programs are defined in the independent claims. Particular embodiments are defined in the dependent claims.

In one embodiment, a policy and charging control method is carried out by a network node including a policy and charging enforcement function (PCEF). The method includes establishing a user plane session with a user (i.e., more specifically its user terminal) and, then, obtaining a profile of the user. The method further includes determining whether a received packet indicates that content of a particular type is to be received by the user, this content being here referred to as original content. The determining step includes inspecting at least one of layer n control information of the packet, wherein n is an integer equal to or larger than 3, and the packet's payload encapsulated by layer 7 control information. The layer level is here understood in the sense of the well-known Open Systems Interconnection (OSI) reference model (but may be translated into other reference models). The method further includes, if it is determined that the packet indicates that the original content of the particular type is to be received by the user, obtaining, based on the profile of the user and the particular type of the original content, information regarding operations to be performed in relation to the original content. The method then includes performing the operations in relation to the original content.

The method uses a policy and charging control (PCC) architecture and, in the PCEF, a deep packet inspection (DPI) engine to analyze packets and recognize that a user is about to receive original content of a particular type. The PCEF may then perform particular operations in relation to the original content depending on its type and on the user's profile. For example, the original content may be modified, additional content may be added to the original content, or the original content or part thereof may be deleted. This enables to perform content delivery control, especially on multimedia content, i.e. content including not only text but also audio content, video content, etc.

The method may be used to remove advertisements without the need for transferring the advertisement content to the user. The method may also be used to enable efficient parental control of web usage.

As mentioned above, the method uses a PCC architecture. Such architecture will now be described in the following.

In communication networks, such as telecommunication networks, a call or a service often involves, on the one hand, a control plane or signalling plane and, on the other hand, a user plane or media plane. The control plane or signalling plane is in charge of establishing and managing a connection between two points on the network. The user plane or media plane is in charge of transporting the user data.

In this context, network operators often want to define and enforce a set of rules in the network. A set of rules constitutes policies. A policy framework for managing and enforcing these policies usually includes at least three elements, or functions: a policy repository for storing the policy rules, which may be user-specific, a policy decision element, function or point, and a policy enforcement element, function or point. The purposes of a policy framework include controlling subscriber access to the networks and services.

A policy framework notably addresses the decisions as to whether the subscriber is entitled, or authorized, to enjoy a service, and whether the network can provide the service to the subscriber (and with which quality of service).

Policy and charging control (PCC) architectures, such as, but not limited to, the architecture described in 3GPP TS 23.203 v9.4.0 (2010-03), "Technical Specification Group Services and System Aspects; Policy and charging control architecture (Release 9)" (available on http://www.3gpp.org/ftp/Specs/html-info/23203.htm), integrate the policy and charging control.

One aim of a policy framework is to set up and enforce rules on a per-subscriber basis to ensure a fair usage of the network resources among all the subscribers, taking into account the specific profile of each subscriber.

A policy and charging control (PCC) method is a method through which a network operator manages the rules to be applied to the users' sessions, or subscribers' sessions, regarding which use of the networks is allowed and which charging rule must be applied to a particular session on the user plane. In the PCC method of the above-discussed embodiment, the PCEF performs operations on original contents to be received by a user, and, by doing so, relieves the user terminal from having to perform some content delivery control tasks.

The policy and charging rules function (PCRF) is a policy decision element which, notably based on the user profile and on the network conditions, decides which rule has to be enforced in the user plane. In a General Packet Radio Service (GPRS) network for example, the PCRF may be capable of communicating with the Gateway GPRS Support Node (GGSN) to transfer authorization information, so as to be able to control Internet Protocol (IP) bearer resources. The IP bearer enables the user plane transport of IP packets and is capable of carrying many IP flows. The PCRF may store the user profiles in relation to the content delivery control tasks to be performed by the PCC architecture, and the PCRF may be queried by the PCEF. As a result, the PCEF may enforce particular rules and may perform specific operations on original contents of a particular type depending on the profile of the user to whom the original content is being sent.

A PCEF is generally in charge of enforcing the PCC rules decided by the PCRF. Furthermore, the PCEF is here in charge of determining whether a received packet indicates that original content of a particular type is about to be received by a user, obtaining information regarding operations to be performed in relation to the original content, and performing the operations in relation to the original content for the particular user.

In one embodiment, obtaining a profile of the user includes obtaining, from a network node including a PCRF, the profile.

The profile of the user may include, in one embodiment, at least one of (i) information on whether, for the user, any operations have to be performed in relation to original contents in general; and (ii) information on operations that have to be performed, for the user, in relation to original contents of one or more particular types.

The information regarding operations to be performed in relation to the original content may include, in one embodiment, at least one of (a₁) a reference to content, here referred to as substitute content, to replace the original content; (b₁) a reference to content, here referred to as additional content, to be sent to the user in addition to the original content; and (C₁) a reference to content, here referred to as undesirable content, to be deleted upon receiving packets to be sent to the user.

In one embodiment, performing the operations in relation to the original content includes at least one of (a₂) replacing the original content by the substitute content, and sending, to the user, the substitute content; (b₂) adding, to the original content, the additional content, and sending, to the user, both the additional content and the original content; and (C₂) removing the undesirable content upon receiving packets to be sent to the user.

In one embodiment, performing the operations in relation to the original content further includes retrieving, from a repository, at least one of the substitute content, the additional content, and the undesirable content. The repository of content may for example be integrally formed with the network node including the PCEF, or may be accessible by the PCEF.

In one embodiment, replacing the original content by the substitute content includes, upon receiving a packet to be sent to the user, identifying the packet's payload encapsulated by layer 7 control information; and replacing the identified payload by a payload including at least part of the substitute content. In this embodiment, the steps of identifying the packet's payload and replacing the identified payload by a payload including at least part of the substitute content may be performed using a deep packet inspection (DPI) engine hosted and controlled by the PCEF.

In one embodiment, adding the additional content includes, upon receiving a packet to be sent to the user, identifying the packet's payload encapsulated by layer 7 control information; and adding, in the identified payload, a payload including at least part of the additional content. In this embodiment, the steps of identifying the packet's payload and adding in the identified payload a payload including at least part of the additional content may be performed using a DPI engine hosted and controlled by the PCEF.

In one embodiment, removing the undesirable content includes, upon receiving a packet to be sent to the user, identifying the packet's payload encapsulated by layer 7 control information; and removing, from the identified payload, payload including at least part of the undesirable content. In this embodiment also, the step of identifying the packet's payload and removing, from the identified payload, payload including at least part of the undesirable content may be performed by a DPI engine hosted and controlled by the PCEF.

The invention also relates to a network node configured for implementing a PCEF, as defined in the claims. The network nodes are configured to participate in and implement the above-described methods, and their particular embodiments. The invention also relates to computer programs as defined in the claims.

### [Brief description of the drawings]

Embodiments of the present invention shall now be described, in conjunction with the appended figures, in which:
Fig. 1 is a flowchart of a method in one embodiment of the invention;
Fig. 2 is a flowchart of a method in one embodiment of the invention, which differs from the method illustrated in Fig. 1 in that the step of performing operations in relation to the original content specifically includes replacing the original content by a substitute content and sending, to the user, the substitute content;
Fig. 3 is a flowchart of a method in one embodiment of the invention, which differs from the method illustrated in Fig. 1 in that the step of performing operations in relation to the original content specifically includes adding, to the original content, an additional content and sending, to the user, both the additional content and the original content;
Fig. 4 is a flowchart of a method in one embodiment of the invention, which differs from the method illustrated in Fig. 1 in that the step of performing operations in relation to the original content specifically includes a step of removing the undesirable content;
Figs. 5, 6 and 7 are flowcharts of portions of methods in embodiments of the invention, which differ respectively from the methods illustrated in Fig. 2, 3 and 4 in that the methods of Figs. 5, 6 and 7 include an additional step of retrieving, from a repository, the substitute content (Fig. 5), the additional content (Fig. 6), or the undesirable content (Fig. 7);
Figs. 8, 9 and 10 are flowcharts of portions of methods in embodiments of the invention, including further specific steps compared to Figs. 5, 6 and 7;
Fig. 11 schematically illustrates a PCEF in one embodiment of the invention;
Fig. 12 schematically illustrates a PCC architecture for understanding the technical context in which embodiments of the invention may be implemented;
Fig. 13 schematically illustrates a system in one embodiment of the invention;
Fig. 14 is a flowchart of a method in one embodiment of the invention, wherein an original content A is requested and replaced with a substitute content B by the PCEF;
Fig. 15 is a flowchart of a method in one embodiment of the invention, wherein an original content A is requested, and then an additional content B is added to the segments of the original content A by the PCEF;
Fig. 16 is a flowchart of a method in one embodiment of the invention, where an original content A is requested, and then an additional content B is added to the original content A by the PCEF;
Fig. 17 is a flowchart of a method in one embodiment of the invention, wherein where an original content A is requested and then an additional content B is added to, and specifically before, the original content A, by the PCEF;
Fig. 18 schematically illustrates a method in one embodiment of the invention, wherein content is downloaded using the HTTP protocol; and
Fig. 19 schematically illustrates a method in one embodiment of the invention, wherein content is downloaded using the RTP/RTSP protocol.

### [Detailed description]

The present invention shall now be described in conjunction with specific embodiments. These specific embodiments serve to provide the skilled person with a better understanding, but are not intended to in any way restrict the scope of the invention, which is defined by the appended claims.

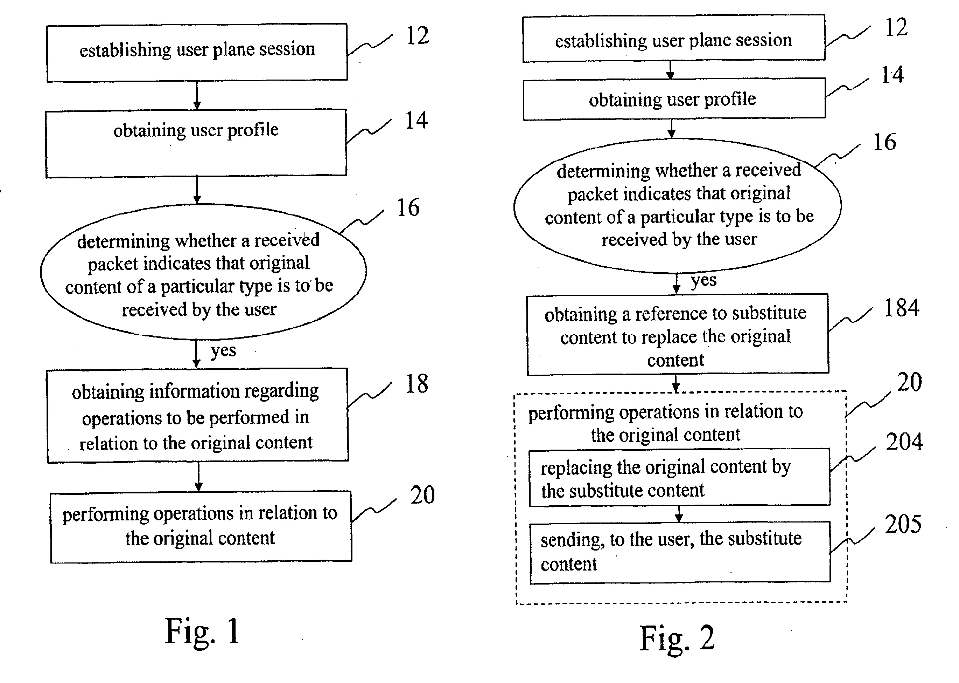

Fig. 1 schematically illustrates a method in one embodiment of the invention. The method is carried out by a PCEF.

First, a user plane session is established 12 between an end user and the PCEF. This may include, for example, activating a packet data protocol (PDP) context. The PCEF then obtains the profile of the user with whom a user plane has been established. The user profile may be obtained 14 from a PCRF. The PCEF may contact the PCRF for example through the Diameter protocol (see for example RFC 4006, "Diameter Credit-Control Application", August 2005).

The PCEF then receives at one point in time, either from the end user or from a content server, a packet. The packet may for example be an Internet Protocol (lP) packet or another type of packet. The packet is transferred in the user plane.

The PCEF determines 16 whether the received packet indicates that original content of a particular type is about to be received by the user. Original content refers here to content included in packet(s), wherein the content was intended for the user. According to embodiments of the invention, the original content may be deleted, replaced with a new content, and/or modified by adding a new content.

The received packet may be a packet originating from the content server and intended to be transmitted to the end user (i.e., in the process of being transmitted to the end user). Alternatively, the received packet may be a packet constituting a request (or part thereof) from the end user to the content server (i.e., a packet originating from the end user, and in the process of being transmitted to the content server). The received packet may include payload representing the original content, or part thereof. Alternatively or additionally, the received packet may include control information (such as for instance headers) announcing the original content about to be transferred towards the end user.

The PCEF performs the determination 16 by deep inspecting the received packet. "Deep inspection" (or "deep inspecting", "deeply inspecting", or "deep packet inspection") means in this embodiment that at least the control information of OSI layer 3 or more of the received packet is inspected, and/or the packet's payload encapsulated by control information of OSI layer 7 is inspected. In other words, the PCEF inspects the received packets beyond their physical layer and data link layer attributes. By inspecting at least the control information of OSI layer 3 or more of the received packet, specific information such as, but not limited to, the source and destination IP addresses of the packet may be retrieved by the PCEF. The PCEF may do so in particular by retrieving or detecting a particular attribute of one control field (e.g., header) of layer 3 or more of the received packet and/or by inspecting the payload of the received packet (the actual application layer data). Various parsing rules may be used to carry out the deep inspection.

The implementation of the determination 16 by deep inspection (i.e.. determining whether a received packet indicates that original content of a particular type is about to be received by the user, as mentioned above) may depend on the service and protocol concerned. A DPI engine may be included in the PCEF, which may have a state machine updated based on received packets, metrics, state changes and signatures. In some embodiments, the PCEF may need to receive hundred of packets before making sure what content type is being inspected, i.e. before a determination procedure 16 results in a positive outcome. In some cases, the PCEF may attempt to guess the content type based on a simple packet without payload, for example, a TCP packet to port 80. Beyond this guessing process, the PCEF may need more information to conclude that the user is really browsing (for example, receiving a HTTP GET request as well). In other words, the DPI engine may be a stateful machine that remembers analysis of previous packets. This information is taken into account and memorized, the information can be also updated upon receiving new packets, and the information is used to classify the packets.

If the PCEF determines 16 that a received packet indicates that original content of a particular type is to be received by the user ("yes" after step 16 in Fig. 1), the PCEF obtains 18 information regarding operations to be performed in relation to the original content, based on the obtained user profile and the particular type of the original content. The information regarding operations to be performed in relation to the original content may be obtained 18 by the PCEF from a repository or database accessible by the PCEF.

Then, operations are performed 20 in relation to the original content. At that stage, DPI technology may also be used for replacing the original content by a substitute content, adding an additional content to the original content, or removing the original content, or part thereof, before forwarding the packets to the end user. Other operations may be performed by the PCEF in addition to, or instead of, those just mentioned.

The order of steps illustrated in Fig. 1 may be changed. In particular, the user profile may be obtained 14 after determining 16 whether a received packet indicates that original content of a particular type is to be received by the user.

Throughout the present document, that a step is carried out by a network node including a PCEF and that a step is carried out by the PCEF are used interchangeably and both mean that the PCEF function implemented on the network node performs the step so that the network node can also be said to perform the step.

As already mentioned above, the PCEF may detect the type of original content about to be transmitted to the user based on a request received from the user, rather than from a packet sent from the content server to the user in response to a user's request. In other words, the PCEF may determine the type of content based on the request. For example, the PCEF may classify the user traffic as HTTP content type based on the HTTP GET request sent from the user. But the PCEF would need to analyze the server's answer to determine if the user is downloading text, video streaming or just a simple image. The PCEF may need to analyze the user requests, the server answers and possibly some signatures (metrics, port scanning, IP/TCP/UDP flows, DNS queries...) to determine what content type is being inspected.

In one embodiment, the content type of the packet being sent by the content server towards the user may be identified by the PCEF by analyzing the header of Multipurpose Internet Mail Extensions (MIME) type, but may also be identified by the properties of the stream of packets sent by the content server.

Although the type of the original content may be identified 16 in packets sent by the user or sent by the content server (determination step 16), the "enforcement" 20 by the PCEF is done on the packets sent by the content server (step 20 of performing operations).

Figs. 2, 3 and 4 will now be referred to. In Figs. 2, 3 and 4, steps 12, 14 and 16 are the same as the corresponding steps in Fig. 1 and are therefore not described further herewith.

Fig. 2 is a flowchart of a method in one embodiment of the invention. The method illustrated in Fig. 2 differs from the method illustrated in Fig. 1 in that step 18 of obtaining information regarding operations to be performed in relation to the original content is a step 184 of obtaining a reference to substitute content to replace the original content. Furthermore, step 20 of performing operations in relation to the original content includes a step 204 of replacing the original content by the substitute content, and then a step 205 of sending, to the user, the substitute content. Replacing 204 the original content by the substitute content may involve more than one packet. Replacing 204 may involve replacing payload including the original content in a plurality of packets by payload including segments of the substitute content. The PCEF may have retrieved the segments of the substitute content from a multimedia content database to which the PCEF accessed based on the reference to the substitute content obtained in step 184. In the same manner, sending 205 to the user, the substitute content may involve sending more than one packet to the user. In particular, step 205 may include sending a stream of packets to the user.

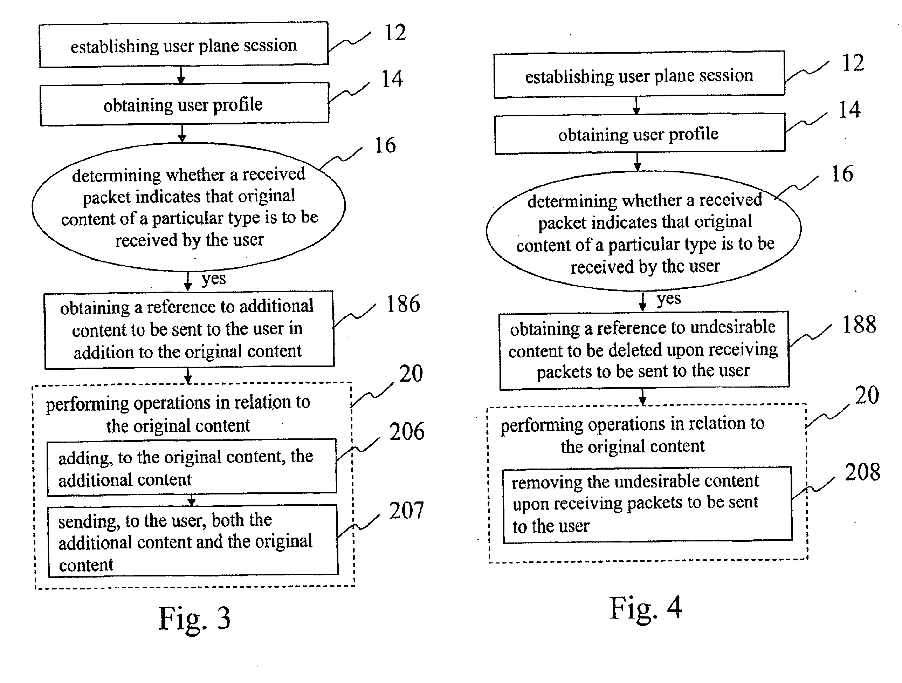

Fig. 3 is a flowchart of a method in one embodiment of the invention. The method illustrated in Fig. 3 differs from the method illustrated in Fig. 1 in that the step of obtaining 18 information regarding operations to be performed in relation to the original content is a step of obtaining 186 a reference to additional content to be sent to the user in addition to the original content. Furthermore, performing 20 operations in relation to the original content includes adding 206, to the original content, the additional content and sending 207, to the user, both the additional content and the original content. This may include adding for example to an existing video clip to be sent to a user, a warning that the video may include inappropriate content for children. The steps of adding 206 and sending 207 may be performed on a stream of packets.

Fig. 4 is a flowchart of a method in one embodiment of the invention, which differs from the method illustrated in Fig. 1 in that the step of obtaining 18 information regarding operations to be performed in relation to the original content is a step of obtaining 188 a reference to undesirable content to be deleted upon receiving packets to be sent to the user. Furthermore, performing 20 operations in relation to the original content includes removing 208 the undesirable content upon receiving packets to be sent to the user. This may for example include removing payload segments corresponding to an advertisement that is unwanted by the user and which would, if not removed, waste resources for its transfer up to the user.

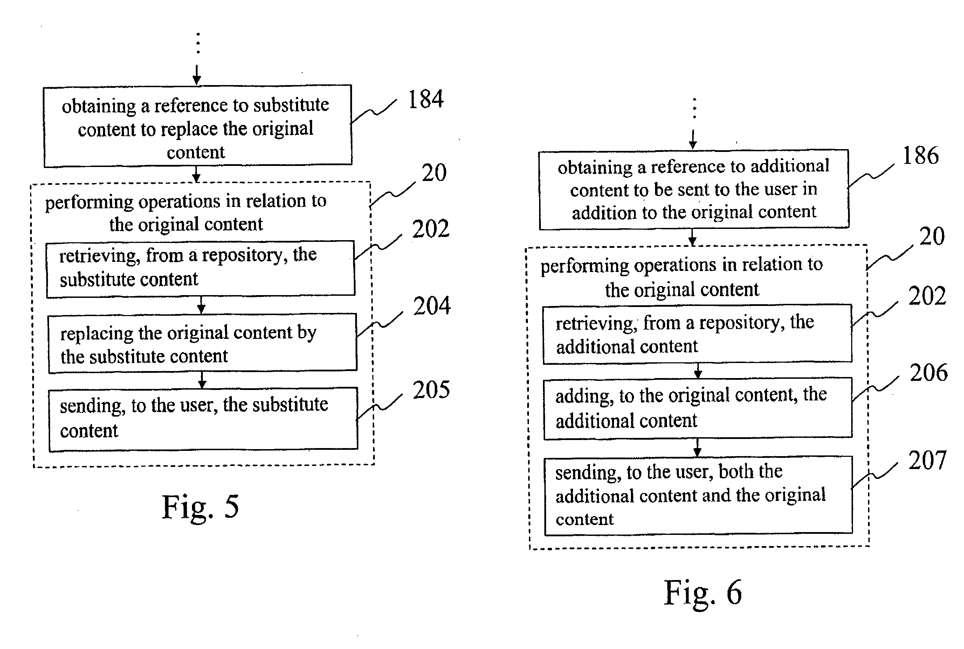

Fig. 5 is a flowchart of a portion of a method in one embodiment of the invention. Compared to the method illustrated in Fig. 2, the step of performing 20 operations in relation to the original content includes an additional step of retrieving 202, from a repository accessible by the PCEF, the substitute content. The substitute content may then be segmented, if necessary, and added in packets' payload to replace the original content in step 204, before being sent 205 to the user.

Fig. 6 is a flowchart of a portion of a method in one embodiment of the invention. Compared to Fig. 3, the step of performing 20 operations in relation to the original content includes a step of retrieving 202, from a repository accessible to the PCEF, the additional content. The additional content may then be segmented, if necessary, and added to the original content in step 206, before being sent 207 to the user.

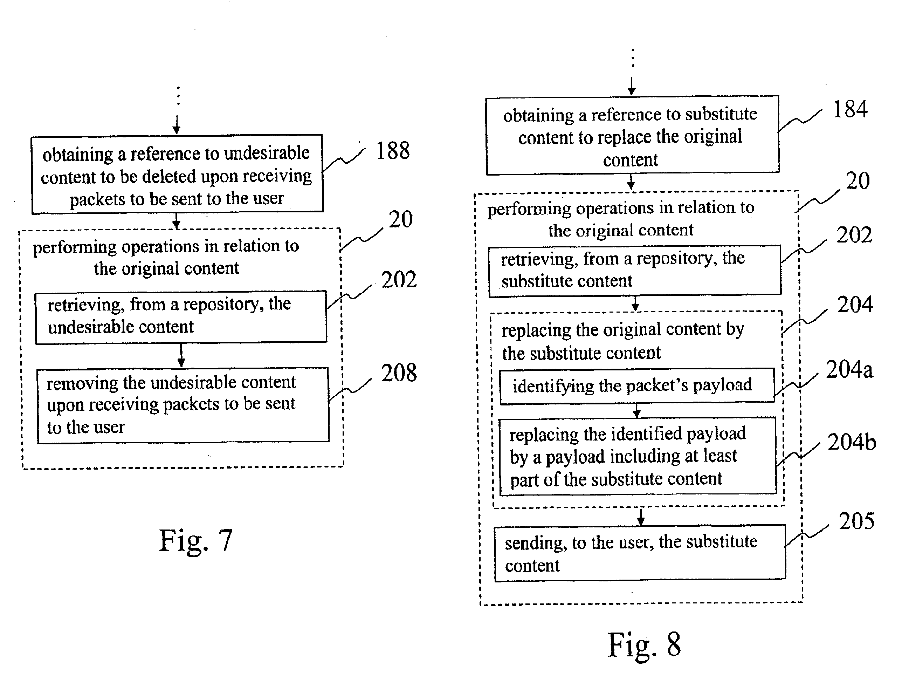

Fig. 7 is a flowchart of a portion of a method in one embodiment of the invention. Compared to Fig. 4, the step of performing 20 operations in relation to the original content includes an additional step of retrieving 202, from a repository accessible by the PCEF, the undesirable content or at least sufficient information regarding the undesirable content to be able to delete 208 the undesirable content from the packets to be sent to the user.

Fig. 8 is a flowchart of a portion of a method in one embodiment of the invention, which differs from the method illustrated in Fig. 5 in that the step of replacing 204 the original content by the substitute content includes a step of identifying 204a the packet's payload, upon receiving a packet to be sent to the user, and replacing 204b the identified payload by a payload including at least part of the substitute content.

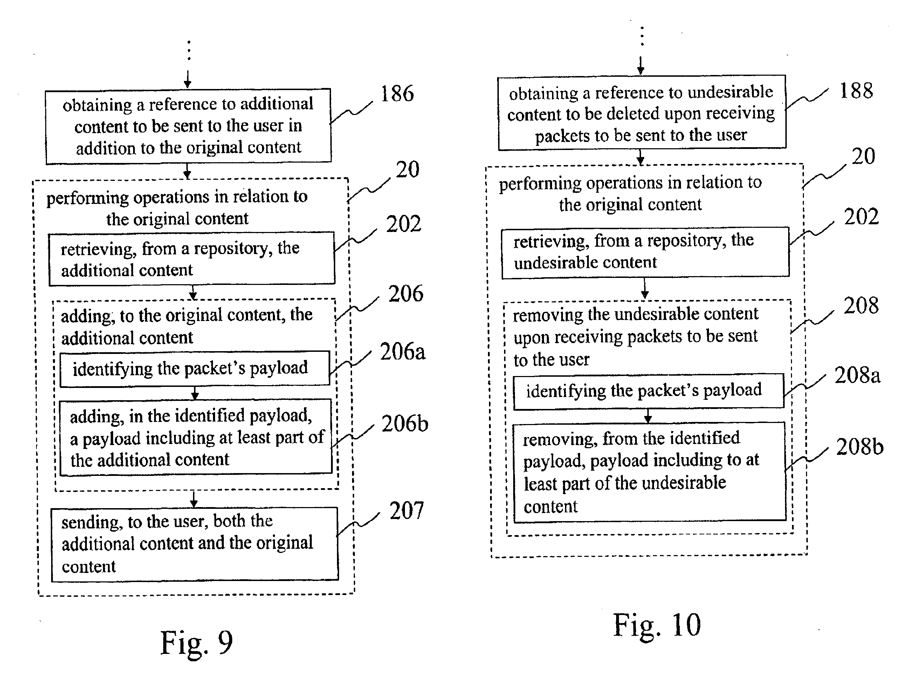

Fig. 9 is a flowchart of a portion of a method in one embodiment of the invention, which differs from the method illustrated in Fig. 6 in that the step of adding 206, to the original content, the additional content includes a step of identifying 206a, upon receiving a packet to be sent to the user, the packet's payload and adding 206b, in the identified payload, a payload including at least part of the additional content.

Fig. 10 is a flowchart of a portion of a method in one embodiment of the invention, which differs from the method illustrated in Fig. 7 in that the step of removing 208 the undesirable content upon receiving a packet to be sent to the user includes a step of identifying 208a the packet's payload and removing 208b, from the identified payload, a payload including at least part of the undesirable content.

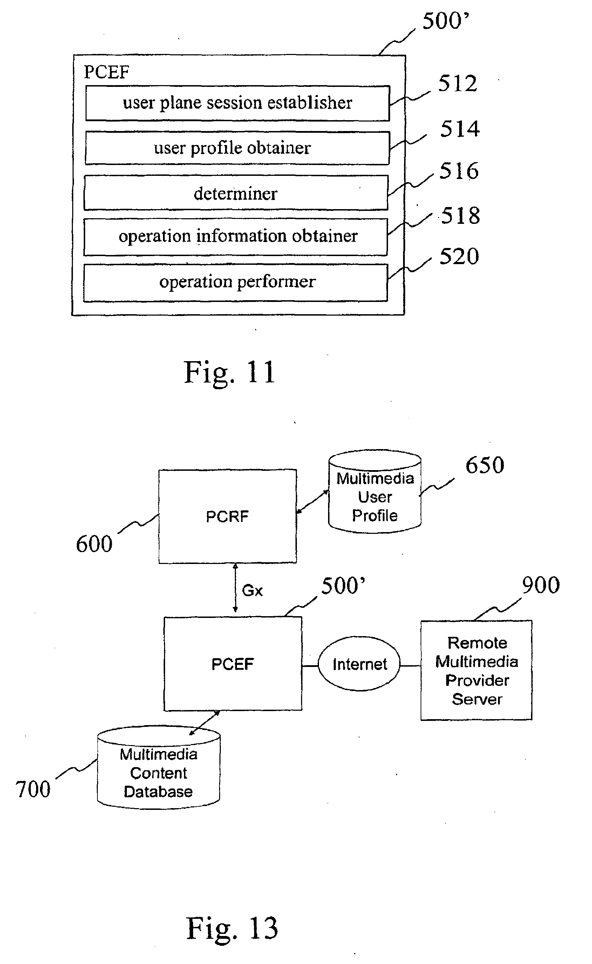

Fig. 11 schematically illustrates a PCEF 500' in one embodiment of the invention. PCEF 500', which may be a network node 500 or a function thereof, includes a user plane session establisher 512, a user profile obtainer 514, a determiner 516, an operation information obtainer 518, and an operation performer 520.

User plane session establisher 512 is a unit configured for establishing a user plane session, such as activating a PDP context, with a user 800. User profile obtainer 514 is a unit configured for obtaining a profile of the user. The profile of the user may be obtained from the PCRF 600 through the Gx interface.

Determiner 516 is a unit configured for determining whether a received packet indicates that original content of a particular type is to be received by the user. Determiner 516 includes a DPI engine or functions of a DPI engine in order to be able to inspect whether the received packet indicates that original content of particular type is to be received by the user.

Operation information obtainer 518 is a unit configured for, if it is determined by determiner 516 that the received packet indicates that the original content of the particular type is to be received by the user, obtaining, based on the obtained user profile and the particular type of the original content, information regarding operations to be performed in relation to the original content. Such information regarding operations to be performed may be obtained either from the PCRF 600 or from a repository or database accessible by the PCEF 500'.

Operation performer 520 is a unit configured for performing the operations in relation to the original content. Similarly to determiner 516, operation performer 520 may include a DPI engine or functions of a DPI engine in order to be able to inspect and manipulate the received packets, i.e. their payload segments and their control fields if necessary, before forwarding the packets towards the end user 800.

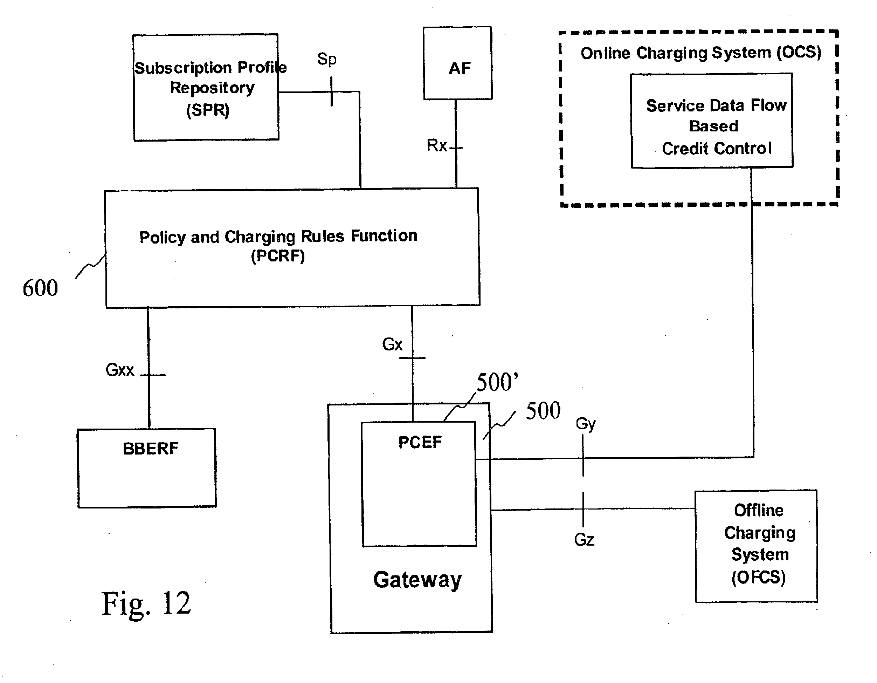

Fig. 12 schematically illustrates a PCC architecture, which may take decision according to the type of IP Connectivity Access Network (IP-CAN) used. The IP-CAN sits between the radio access network (RAN) and the core network (CN), connecting access-side signalling to the service controls in the core network. The PCC architecture schematically illustrated in Fig. 12 is similar to the one illustrated 3GPP TS 23.203 V9.4.0 figure 5.1.1 (full reference already mentioned above). In Fig. 12, PCRF 600 and PCEF 500' are the most important functions of the PCC architecture as far as embodiments of the invention are concerned.

PCRF 600 is a functional element that performs policy control decision and flow based charging control. PCRF 600 provides network control regarding the service data flow detection, gating, quality of service (QoS) and flow based charging (except credit management) towards the PCEF 500'.

PCEF 500' encompasses service data flow detection, policy enforcement and flow based charging functionalities. DPI technology, embedded in PCEF 500', supports packet inspection and service classification, which may consist in IP packets classified according to a configured tree of rules so that they are assigned to a particular service session.

The Gx reference point is defined in 3GPP TS 29.212 (3rd Generation Partnership Project; Technical Specification Group Core Network and Terminals; Policy and Charging Control over Gx reference point (Release 9) 3GPP TS 29.212 V9.2.0) and lies between PCRF 600 and PCEF 500'. The Rx reference point is defined in 3GPP TS 29.214 (3rd Generation Partnership Project; Technical Specification Group Core Network and Terminals; Policy and Charging Control over Rx reference point (Release 9) 3GPP TS 29.214 V9.2.0) and lies between the AF and PCRF 600.

In current PCC architectures, there is no method for controlling multimedia content delivery. There is no solution for modifying web traffic content so that the modification, addition or removal of content would be perceived by the end user. There is no solution for modifying web page content, such as HTML content, i.e. no solution to change the end-user traffic content.

In one embodiment, multimedia content that a user 800 downloads from a remote multimedia provider server 900 is modified. Namely, PCEF 500' establishes a session with PCRF 600 once the user logs on into the network. This may include a PDP context activation. This session is opened to exchange action/information between PCEF 500' and PCRF 600 and may be based on the Diameter protocol. PCEF 500' then identifies the end-user multimedia content download by DPI technology. This content may be transported using protocol like HTTP (standing for Hypertext Transfer Protocol) or RTSP (standing for Real Time Streaming Protocol). PCEF 500' then retrieves a user profile. The user profile may contain a sequence or list of actions (i.e. operations) to perform or/and a possible multimedia content reference to be inserted/replaced. These actions can also be applied according to other user characteristics of the mobile scenarios that are normally provided by authentication protocols like for example Radius protocol. Some of these attributes can be user location information, charging characteristics.

Examples of actions (i.e. operations) performed in this embodiment are:
(i) Replacing the whole original multimedia content by a new one. Namely, PCEF 500', using DPI technology, may replace the original multimedia content requested by the user 800 with another content (i.e. a substitute content).
(ii) Inserting a new multimedia content at any point of the original content that was requested for the user 800 and sending, by PCEF 500', the new modified multimedia content to the user 800. Afterwards, PCEF 500' may also send the content requested by the user 800.

These modification operations to the content may be transparent for an end user 800 perspective. PCEF 500' with DPI capabilities may behave as an intermediate node in the connection between end user 800 and remote multimedia content provider server 900 but end users 800 may not be aware of the operations performed by PCEF 500'. As a result, end user 800 may download a different multimedia content that he requested but he need not be aware this fact (provided, naturally, that the operations of PCEF 500' are legal and that the user consents thereto).

Fig. 13 schematically illustrates nodes that may be involved in one embodiment of the invention. The subscriber user 800, who is the end user communication originator, is however not illustrated in Fig. 13. A multimedia content provider server 900 is provided and includes original contents to be downloaded. PCEF 500' uses DPI technology to analyze the user communication. PCRF 600 decides the multimedia-swap user profile according to information provided by PCEF 500' and information stored in PCEF 500'. The PCEF multimedia content repository 700 may be a file system in PCEF 500' or accessible by PCEF 500'. This local repository 500' may be used to temporally save the original contents that are been downloaded in a cache.

It follows that two databases may be used in this embodiment, namely:
(a) a multimedia user profile database 650, which may be hosted in the PCRF 600 or locally in the PCEF 500'. Database 650 may contain the following attributes related to a user or group of users:
   (a1) Information indicating whether the user, or group of users, has the service enabled, i.e. the service including performing operations by PCEF 500' according to embodiments of the invention. If service is enabled, multimedia content may be swapped.
   (a2) Information indicating whether the multimedia contents downloaded from the internet may be mapped and/or cached into local files.
   (a3) Information relating to possible actions that may be performed by
   PCEF 500', such as:
      (a3-1) Swapping the requested user content if a remote server Uniform Resource Identifier (URI) is matched;
      (a3-2) Swapping the user content if a multimedia content encoder either audio or video is requested;
      (a3-3) Swapping the user content based on requested time and date.
(b) a multimedia content database 700, which is a database including the multimedia content that may replace the requested user content (i.e. the original content) or/and be inserted in addition to the requested user content (i.e. the original content). This database may be hosted in PCEF 500' or at least accessible by PCEF 500'.

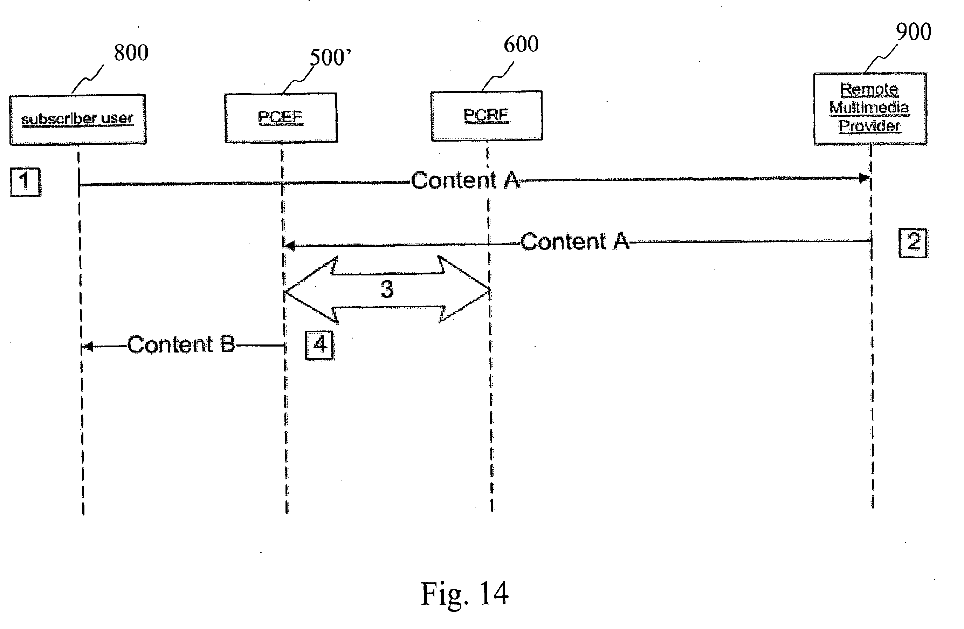

Figs. 14 to 17 schematically illustrate methods in embodiments of the invention. First, PCEF 500' establishes a session with PCRF 600 once the user 800 logs on into the network (e.g., PDP context activation). This session is opened to exchange action/information between PCEF 500' and PCRF 600 and may be based on a Diameter protocol. Then, PCEF 500' identifies 16 the end-user multimedia content download using DPI technology. This content may be transported using a protocol like HTTP or RTSP.

Then, PCEF 500' retrieves 14 an end user profile (multimedia user profile) from the multimedia user profile database 650. This profile contains a sequence of actions to perform or/and a possible multimedia content reference to be inserted in addition to the original content or to replace the original content. Example of these actions, in which user 800 has established 12 an IP-CAN session and PCEF 500' has established a session with PCRF 600, are:

### Case 1: Replacement of original multimedia content

The whole original multimedia content may be replaced by a new one, as schematically illustrated in Fig. 14. Using the DPI technology, PCEF 500' may replace the original multimedia content requested by the user 800 with a substitute content stored in the multimedia content database 700. This may be performed as follows:
(step 1) User 800 asks for multimedia content A (original content) to the multimedia remote provider server 900.
(step 2) Remote multimedia provider server 900 sends multimedia content A (original content) towards user 800, through PCEF 500'.
(step 3) PCEF 500' asks PCRF 600 for multimedia content and action (operations) to be applied for multimedia content A (original content) for the mobile station of user 800. According to the PCRF's instructions, PCEF 500' replaces original content A with a new multimedia content called B (substitute content). This multimedia content is retrieved from multimedia content database 700.
(step 4) PCEF 500' sends multimedia content B to user 800.

### Case 2: Content insertion wherein a new multimedia content is inserted several times in different points at original content

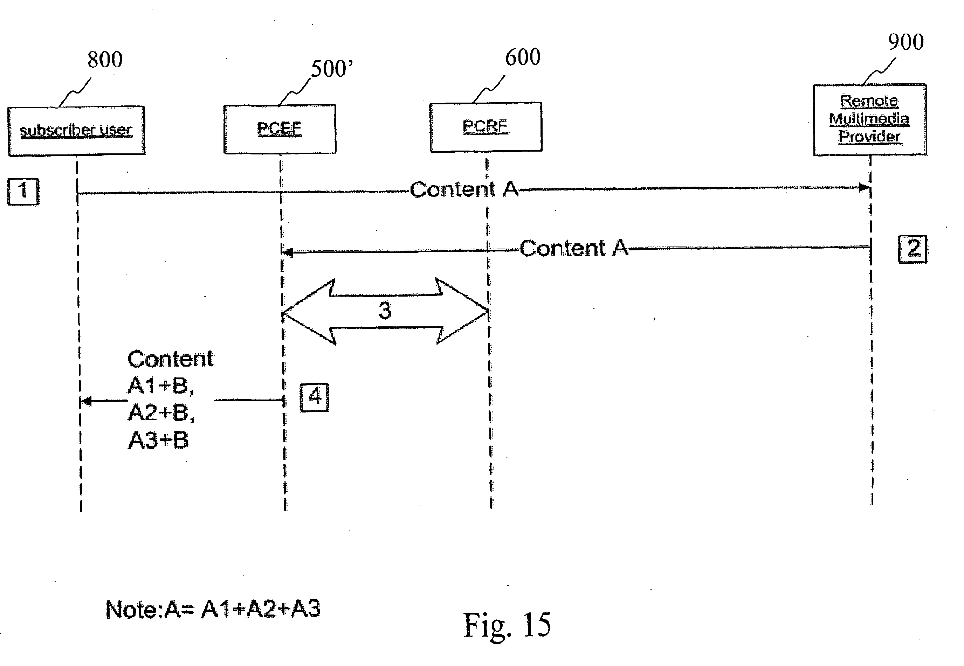

As schematically illustrated in Fig. 15, a new multimedia content (additional content) may be inserted, i.e. added, at any point of the original content that was requested by user 800. PCEF 500' may also cache the original content (for future use). PCEF 500' sends the new modified multimedia content to user 800 and, afterwards, PCEF 500' may also send the original content requested by user 800. This may be performed as follows:
(step 1) User 800 asks for multimedia content A (original content) to the multimedia remote provider server 900.
(step 2) Remote multimedia provider server 900 sends multimedia content A (original content) towards user 800, through PCEF 500'.
(step 3) PCEF 500' asks to PCRF 600 for multimedia content and action (operations) to be applied for multimedia content A (original content) for the mobile station of user 800. PCEF 500' adds, according to PCRF instructions, a new multimedia content, called B in Fig. 14 (i.e. additional content B), in a predefined period of time to the multimedia content A (original content).
(step 4) PCEF 500' sends multimedia content A1+B, A2+B, A3+B to user 800, wherein A1 +A2+A3=A, meaning that A1, A2, and A3 are three segments forming original content A.

### Case 3: Content insertion wherein a new multimedia content is inserted at the end of original content

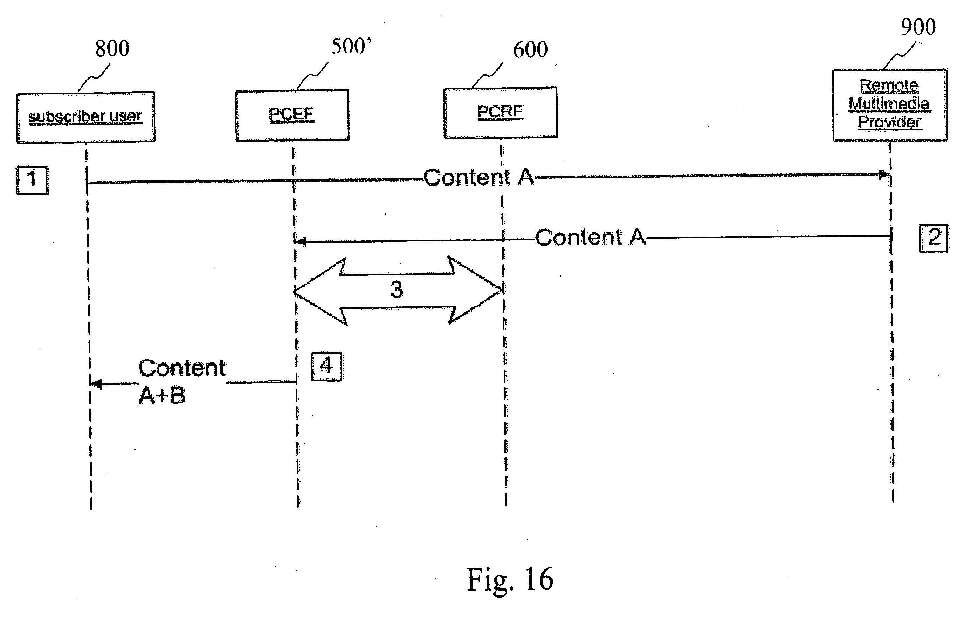

As schematically illustrated in Fig. 16, multimedia content may also be inserted at the end of the original content. This may be performed as follows:
(step 1) User 800 asks for multimedia content A (original content) to the remote multimedia provider server 900.
(step 2) Remote multimedia provider server 900 sends multimedia content A (original content) towards user 800, through PCEF 500'.
(step 3) PCEF 500' asks PCRF 600 for multimedia content and action (operations) to be applied for multimedia content A (original content) for the mobile station of user 800. PCEF 500' inserts according to PCRF instructions a new multimedia content to form A+B. It is composed by the original multimedia content requested by the user (original content A) and the multimedia content stored in the multimedia content database 700 and ordered to be inserted by PCRF (additional content B).
(step 4) PCEF 500' sends multimedia content A+B to user 800.

### Case 4: Content insertion wherein a new multimedia content is inserted at the beginning of original content

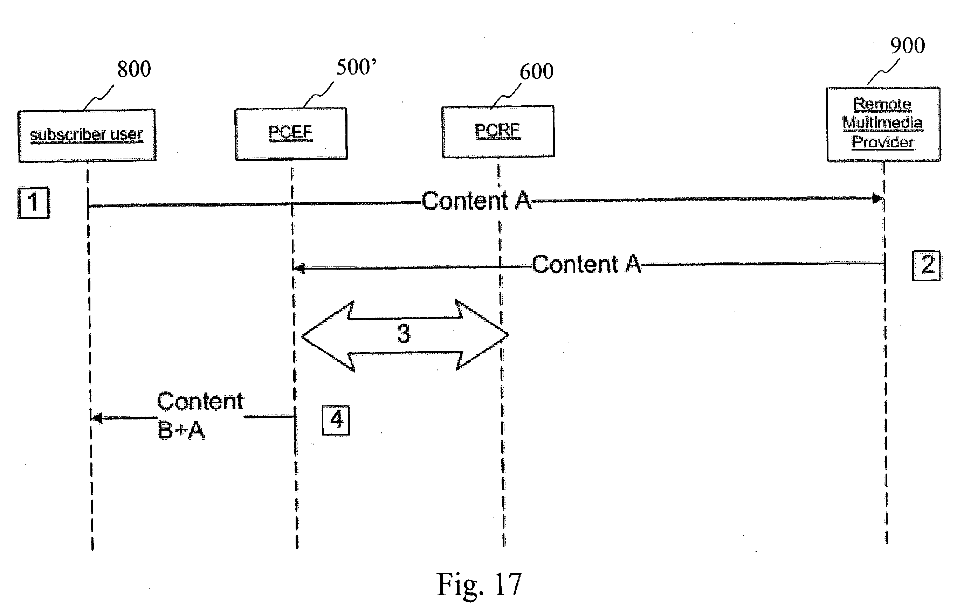

As schematically illustrated in Fig. 17, multimedia content may also be inserted before the original content. This may be performed as follows:
(step 1) User 800 asks for multimedia content A (original content) to the remote multimedia provider server 900.
(step 2) Remote multimedia provider server 900 sends multimedia content A (original content) towards user 800, through PCEF 500'.
(step 3) PCEF 500' asks PCRF 600 for multimedia content and action (operations) to be applied for multimedia content A (original content) for the mobile station of user 800. PCEF 500' inserts according to PCRF instructions a new multimedia content called B+A. It is composed by the original multimedia content requested by the user (A) and the multimedia content stored in the multimedia content database and ordered to be inserted by PCRF (B).
(step 4) PCEF 500' sends multimedia content B+A to user 800.

In cases 1 to 4 (embodiments illustrated in Figs. 14 to 17), the user traffic is not blocked or dropped in the insertion/replacement of multimedia contents. These modifications are transparent for an end user 800. Namely, PCEF 500' with DPI capabilities behaves as an intermediate node in the connection between end user 500' and remote multimedia content provider server 900 but end users 800 are not aware of the operations of PCEF 500'. End user 800 may download a different multimedia content that he requested but he may not be aware of this fact.

In order to achieve this goal, PCEF 500' with DPI capabilities replaces the IP/TCP packets exchanged between end user 800 and remote multimedia provider server 900, replacing the corresponding TCP/IP sequence numbers. PCEF 500' does not interfere in the TCP/IP user communication. That is, retransmissions, fragmentation, and packet identifier are kept. On the other hand, some specific changes might be applied in relation to certain content types. For example:
- When end user 800 downloads multimedia contents based on HTTP protocol, PCEF 500' with DPI capabilities may create, update or delete MIME types (see RFC 2045, "Multipurpose Internet Mail Extensions (MIME) Part One: Format of Internet Message Bodies", November 1996) from HTTP protocol.
- When end user 800 downloads multimedia contents based on RTSP/ RTP protocol, then PCEF 500' with DPI capabilities may know the negotiated bitrates, multimedia codec, between end user 800 and multimedia content provider 900. PCEF 500' may insert new RTP packets if it is needed as for example when the negotiated codec between the end user and the multimedia server implies real time changes. PCEF 500' may also need to inject new RTSP packets or extract information from the multimedia payload conveyed in the RTP stream, such as the bitrates and the codecs.

This scenario (RTP communication) may imply that PCEF 500' has the multimedia content before the end user 800 requested it.

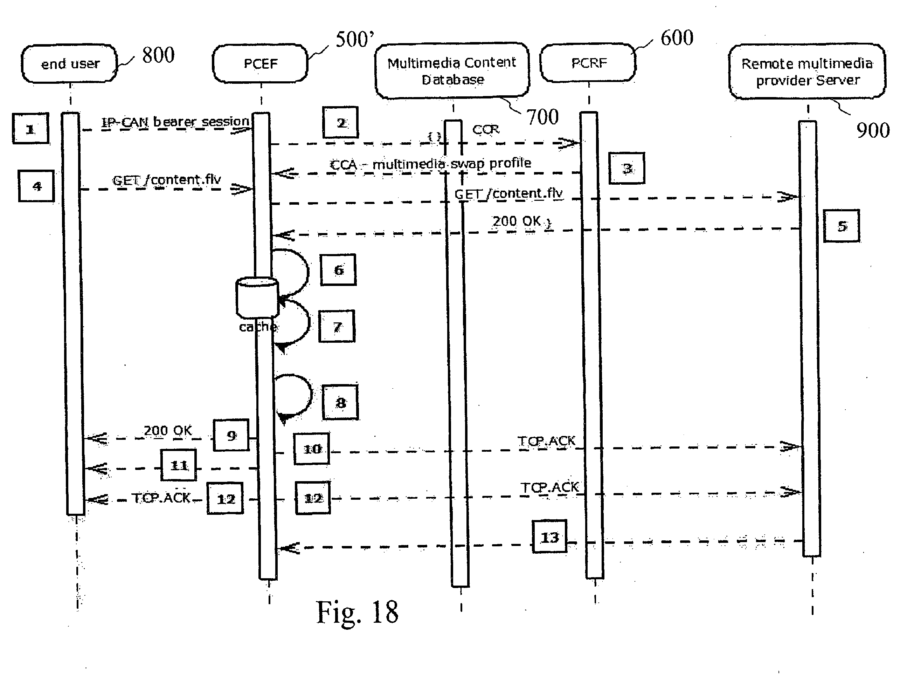

Fig. 18 schematically illustrates steps of a method in one embodiment of the invention, where user 800 downloads a multimedia content using the HTTP protocol. Diameter protocol has been chosen for communication between PCEF 500' and PCRF 600 but other protocols may be used. The steps are as follows:
(step 1) User 800 logs on into the core packet network. When user 800 connects to the network, a first IP-CAN session is established at PCEF 500' with DPI capabilities (PCEF-DPI) or an existing IP-CAN session is modified.
(step 2) PCEF 500' request to PCRF 600 a user profile (multimedia user profile) using a CCR diameter message. In this context, CCR stands for Credit-Control-Request, which is a type of Diameter command.
(step 3) PCRF 600 answers with the user profile to PCEF 500' in a CCA diameter message. In this context, CCA stands for Credit-Control-Answer, which is also a type of Diameter command.
(step 4) User 800 requests a multimedia content (i.e. an original content) over HTTP (e.g. video streaming).
(step 5) The multimedia content provider server 900 answers with an HTTP message including the requested original content (HTTP result code 200 in the exemplary flow of Fig. 18). The message also contains the length of the HTTP content and encoding type.
(step 6) PCEF 500' using DPI capabilities identifies the type of the original content.
(step 7) PCEF 500' selects a sequence of actions (i.e. operations) for this content type based on the previous retrieved user profile (step 2) and the content type of the original content. This sequence of actions may imply saving the multimedia content in a cache for future uses.
(step 8) PCEF 500' performs the first action in the sequence. PCEF 500' creates a new MIME HTTP header. The new MIME HTTP header is created replacing the received original MIME HTTP header (received in step 5). The new MIME header may update the codec information if this is needed.
(step 9) The new HTTP message (HTTP 200 OK operation code) with the new HTTP MIME header is sent to end user 800.
(step 10) Depending on the sequence of actions, PCEF 500' may or may not drop the multimedia content provider connection. If the connection is not dropped, user 800 may reuse again this connection for other purposes. PCEF 500' may negotiate the bandwidth with the multimedia remote content provider server 900. For example, PCEF 500' may negotiate the TCP ACK time interval with the content provider server 900. This may be used to save PCEF resources. The TCP ACK retransmissions may be used to save time in order to save packets in a cache and send them from the remote content provider server 900.
(step 11) PCEF 500' continues sending the multimedia content in TCP packet payloads. The payloads may be replaced using a substitute content from the multimedia content database 700, for instance to insert own multimedia content (e.g. advertisements, warnings, etc).
(step 12) lf a new multimedia content is inserted, then each delivered packet modifies the TCP/IP sequence numbers in user side and also in server side. These new numbers should be correlated in the TCP/IP flow state with right IP.Id, TCP.SequenceNumber and should follow possible TCP retransmission and IP fragmentation flow.
(step 13) TCP ACKs may be sent from remote multimedia provider server 900.

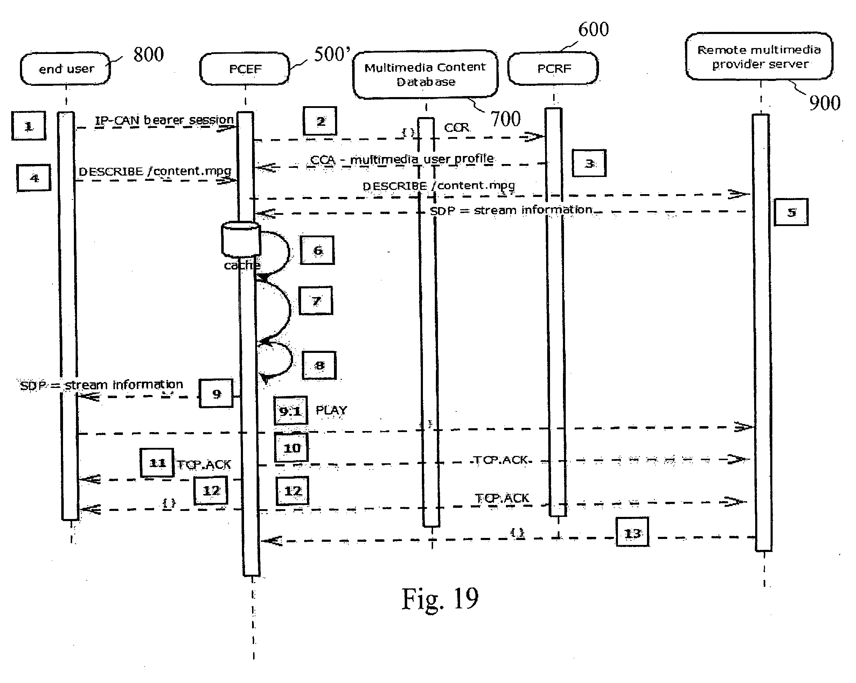

Fig. 19 schematically illustrates steps of a method in one embodiment of the invention when user 800 downloads a multimedia content using the RTP/RTSP protocol. Diameter protocol has been chosen for communication between PCEF 500' and PCRF 600 but other protocols could be used. The steps are similar to the previous schema of Fig. 18, except for some specific protocol properties. The steps are as follows:
(step 1) User 800 logs on into the core packet network. When user 800 connects to the network, this establishes a first IP-CAN session at PCEF 500' with DPI capabilities (PCEF-DPI) or modifies an existing IP-CAN session.
(step 2) PCEF 500' requests to PCRF 600 a user profile (called multimedia user profile) in a CCR diameter message.
(step 3) PCRF 600 answers with the user profile to PCEF 500' in a CCA diameter message.
(step 4) User 800 requests a multimedia content (original content) over RTSP (video streaming). The initial message is a DESCRIBE, indicating the corresponding multimedia object in a RTSP URL located in the remote multimedia provider server 900.
(step 5) The multimedia content provider server 900 answers with a Session Description Protocol (SDP) message indicating the encoding type for audio and video, such as for instance:
   RTSP/1.0 200 OK
   Content-Type: application/sdp
   Content-Length: 376
   i=Content-type description
   m=audio 3456 RTP/AVP 0
   m=video 2232 RTP/AVP 31
   AVP stands here for "attribute value pair".
   (step 6) PCEF 500' using DPI capabilities identifies the content-type of the original content.
(step 7) PCEF 500' selects a sequence of actions for this content type based on the previous retrieved user profile (step 2) and the content type of the original content. This sequence of actions may imply saving the multimedia content in a cache for future use.
(step 8) PCEF 500' performs the first action in the sequence. PCEF 500' re-creates a new SDP information (DESCRIBE message). The new SDP message is created by replacing the received original SDP message (step 5). The new message may update the codec information if this is needed.
(step 9) The new DESCRIBE packet with the new values is sent to end user 800. In some scenarios based on RTSP protocol, a RSTP "play" command may be sent to download the multimedia content and this command may also be replaced in some cases depending on the multimedia content to be inserted.
(step 10) Depending on the sequence of actions, PCEF 500' may or may not drop the multimedia content provider connection. If the connection is not dropped, the user 800 may reuse again this connection for other purposes. PCEF 500' may negotiate the bandwidth with the multimedia remote content provider server 900. For example, PCEF 500' may negotiate the TCP ACK time interval with the content provider server 900. This may be used to save PCEF resources. The TCP ACK retransmissions may be used to save time in order to cache packets sent from the remote content provider server 900.
(step 11) Each delivered packet should be correlated in the TCP / IP flow state with right IP.Id, TCP.SequenceNumber and should follow possible TCP retransmission and IP fragmentation flow.
(step 12) TCP ACKs are sent to the remote multimedia provider server 900 and to end user 800 in case of PCEF 500' needs to save multimedia content in a cache.
(step 13) In parallel to this TCP control connection (RTSP), remote multimedia provider server 900 delivers the requested video and audio over UDP protocol based on the stream flows negotiated in step 5 (RTP protocol). PCEF 500' replaces the UDP packet payload inserting the own multimedia content obtained from multimedia content database 700 (e.g. advertisements or warnings).

Some specific encoding type (such as MPEG2) may support interlaced video techniques and, thus, they might require saving some UDP packets in order to insert the new content in specific points on the video frame. From a technical point of view, it is feasible to insert multimedia content into other multimedia content for most video formats.

The deep packet inspection (DPI) technology supports packet inspection, which consists of a set of rules to identify certain properties of the packets and changing the payload segments of the packets to carry out the replacements, additions and removals of contents according to embodiments of the invention. DPI may be implemented using the so-called traffic detection function (TDF), which can be either stand-alone or collocated with the PCEF 500' (see 3GPP TR 23.813 "Study on policy solutions and enhancements" for details).

In one embodiment, "deep inspection" includes specifically inspecting at least the control information of OSI layer 5 or more of the received packet, and/or the packet's payload encapsulated by control information of OSI layer 7.

In one embodiment, "deep inspection" includes specifically inspecting at least the control information of OSI layer 7 of the received packet, and/or the packet's payload encapsulated by control information of OSI layer 7.

Advantages of embodiments of the invention notably include:
- Multimedia advertisements or warnings may be inserted based on policies and profiles (of users or groups of users) defined by the network operator. This may depend on any one of: end user localization, end user marketing profiles, and end user parental control profiles.
- Personalized advertisements or warnings may be included without sending sensitive information to third parties, such as the MSISDN (i.e., the telephone number on the SIM card).
- Advertisements or warnings may be introduced during end user content retransmission.
- It is also possible to block, i.e. delete, an original content and/or to replace the original content by a previously defined content, although, in some cases, the end user 800 may see a void frame in his browser and the end user 800 may even think that mobile network is not working properly. The block, i.e. deletion, of multimedia content is however very useful in solutions like parental control.

The physical entities according to the invention, including the network nodes may comprise or store computer programs including instructions such that, when the computer programs are executed on the physical entities, steps and procedures according to embodiments of the invention are carried out. The invention also relates to such computer programs for carrying out methods according to the invention, and to any computer-readable medium storing the computer programs for carrying out methods according to the invention.

Where the terms "user plane session establisher", "user profile obtainer", "determiner", "operation information obtainer", and "operation performer" are used herewith, no restriction is made regarding how distributed these elements may be and regarding how gathered elements may be. That is, the constituent elements of a unit may be distributed in different software or hardware components or devices for bringing about the intended function. A plurality of distinct elements may also be gathered for providing the intended functionalities.

Any one of the above-referred units of a server, or a network node, may be implemented in hardware, software, field-programmable gate array (FPGA), application-specific integrated circuit (ASICs), firmware or the like.

In further embodiments of the invention, any one of the above-mentioned and/or claimed user plane session establisher, user profile obtainer, determiner, operation information obtainer, and operation performer is replaced by, respectively, a user plane session establishing unit, a user profile obtaining unit, a determining unit, an operation information obtaining unit, and an operation performing unit or by, respectively, user plane session establishing means, user profile obtaining means, determining means, operation information obtaining means, and operation performing means, for performing the functions of the user plane session establisher, user profile obtainer, determiner, operation information obtainer, and operation performer.

In further embodiments of the invention, any one of the above-described steps may be implemented using computer-readable instructions, for example in the form of computer-understandable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Policy and charging control method carried out by a network node (500) including a policy and charging enforcement function (500'), the method including
establishing (12) a user plane session with a user (800);
obtaining (14) a profile of the user;
determining (16) whether a received packet indicates that content of a particular type is to be received by the user, this content being hereinafter referred to as "original content", wherein determining (16) includes inspecting at least one of
layer n control information of the packet, wherein n is an integer equal to or larger than 3; and
the packet's payload encapsulated by layer 7 control information;
wherein the layer level is understood in the sense of the
Open Systems Interconnection reference model; and
if it is determined that the packet indicates that the original content of the particular type is to be received by the user, obtaining (18), based on the profile of the user and the particular type of the original content, information regarding operations to be performed in relation to the original content,
**characterized in that**
the information regarding operations to be performed in relation to the original content includes at least one of
a reference to content, hereinafter referred to as "substitute content", to replace the original content;
a reference to content, hereinafter referred to as "additional content", to be sent to the user in addition to the original content; and
a reference to content, hereinafter referred to as "undesirable content", to be deleted upon receiving packets to be sent to the user; and
the method further includes:
performing (20) the operations in relation to the original content,
wherein performing (20) the operations in relation to the original content includes at least one of
replacing (204) the original content by the substitute content, and sending (205), to the user, the substitute content, wherein replacing (204) the original content by the substitute content comprises, upon receiving (19) a packet to be sent to the user:
identifying (204a) the packet's payload encapsulated by layer 7 control information; and
replacing (204b) the identified payload by a payload including at least part of the substitute content;
adding (206), to the original content, the additional content, and sending (207), to the user, both the additional content and the original content, wherein adding (206) the additional content comprises, upon receiving (19) a packet to be sent to the user:
identifying (206a) the packet's payload encapsulated by layer 7 control information; and
adding (206b), in the identified payload, a payload including at least part of the additional content; and
removing (208) the undesirable content upon receiving packets to be sent to the user, wherein removing (208) the undesirable content comprises, upon receiving (19) a packet to be sent to the user:
identifying (208a) the packet's payload encapsulated by layer 7 control information; and
removing (208b), from the identified payload, payload including at least part of the undesirable content.

2. Method of claim 1, wherein obtaining (14) a profile of the user includes obtaining (14), from a network node (600) including a policy and charging rules function, the profile.

3. Method of claim 1 or 2, wherein the profile of the user includes at least one of
information on whether, for the user, any operations have to be performed in relation to original contents in general; and
information on operations that have to be performed, for the user, in relation to original contents of one or more particular types.

4. Method of claim 1, 2 or 3, wherein performing (20) the operations in relation to the original content further includes retrieving (202), from a repository (700), at least one of the substitute content, the additional content, and the undesirable content.

5. Method according to any one of the preceding claims, wherein replacing (204) the original content by the substitute content comprises:
replacing the payload in each of a plurality of packets by payload including segments of the substitute content.

6. Method according to any one of the preceding claims, wherein adding (206), to the original content, the additional content comprises:
adding, to an existing video clip to be sent to a user, a warning that the video may include inappropriate content for children.

7. Method according to any one of the preceding claims, wherein obtaining (18) information regarding operations to be performed in relation to the original content is further based on matching a Uniform Resource Identifier.

8. Method according to any one of the preceding claims, wherein obtaining (18) information regarding operations to be performed in relation to the original content is further based on detecting that either audio or video is requested.

9. Method according to any one of the preceding claims, wherein obtaining (18) information regarding operations to be performed in relation to the original content is further based on the time and date when the original content is requested.

10. Network node (500) including a policy and charging enforcement function (500'), the network node (500) including
a unit (512), hereinafter referred to as "user plane session establisher" (512), configured for establishing a user plane session with a user (800);
a further unit (514), hereinafter referred to as "user profile obtainer" (514), configured for obtaining a profile of the user;
a further unit (516), hereinafter referred to as "determiner" (516), configured for determining whether a received packet indicates that content of a particular type is to be received by the user; this content being hereinafter referred to as "original content", wherein determining includes inspecting at least one of
layer n control information of the packet, wherein n is an integer equal to or larger than 3; and
the packet's payload encapsulated by layer 7 control information;
wherein the layer level is understood in the sense of the Open Systems Interconnection reference model; and
a further unit (518), hereinafter referred to as "operation information obtainer" (518), configured for, if it is determined by the determiner (516) that the packet indicates that the original content of the particular type is to be received by the user, obtaining, based on the profile of the user and the particular type of the original content, information regarding operations to be performed in relation to the original content,
**characterized in that**
the information regarding operations to be performed in relation to the original content includes at least one of
a reference to content, hereinafter referred to as "substitute content", to replace the original content;
a reference to content, hereinafter referred to as "additional content", to be sent to the user in addition to the original content; and
a reference to content, hereinafter referred to as "undesirable content", to be deleted upon receiving packets to be sent to the user; and
the network node (500) further includes:
a further unit (520), hereinafter referred to as "operation performer" (520), configured for performing the operations in relation to the original content,
wherein the operation performer (520) is configured for performing the operations in relation to the original content by at least one of
replacing the original content by the substitute content, and sending, to the user, the substitute content, wherein replacing the original content by the substitute content includes, upon receiving a packet to be sent to the user:
identifying the packet's payload encapsulated by layer 7 control information; and
replacing the identified payload by a payload including at least part of the substitute content;
adding, to the original content, the additional content, and sending, to the user, both the additional content and the original content, wherein adding the additional content includes, upon receiving a packet to be sent to the user:
identifying the packet's payload encapsulated by layer 7 control information; and
adding, in the identified payload, a payload including at least part of the additional content; and
removing the undesirable content upon receiving packets to be sent to the user, wherein removing (208) the undesirable content includes, upon receiving a packet to be sent to the user:
identifying the packet's payload encapsulated by layer 7 control information; and
removing, from the identified payload, payload including at least part of the undesirable content.

11. Network node (500) of claim 10, wherein the user profile obtainer (514) is configured for obtaining a profile of the user by at least obtaining, from a network node (600) including a policy and charging rules function.

12. Network node (500) of claim 10 or 11, wherein the profile of the user includes at least one of
information on whether, for the user, any operations have to be performed in relation to original contents in general; and
information on operations that have to be performed, for the user, in relation to original contents of one or more particular types.

13. Network node (500) of claim 10, 11 or 12, wherein the operation performer (520) is configured for performing the operations in relation to the original content by additionally at least retrieving, from a repository (700), at least one of the substitute content, the additional content, and the undesirable content.

14. Computer program including computer-readable instructions configured, when executed on a network node (500), to cause the network node (500) to carry out the method according to any one of claims 1 to 9.

## Patentansprüche

1. Verfahren zur Richtlinien- und Abrechnungskontrolle, das durch einen Netzknoten (500) ausgeführt wird, der eine Richtlinien- und Abrechnungsdurchsetzungsfunktion (500') umfasst, wobei das Verfahren umfasst:
Aufbauen (12) einer Benutzerebenensitzung mit einem Benutzer (800) ;
Einholen (14) eines Profils des Benutzers;
Bestimmen (16), ob ein empfangenes Paket anzeigt, dass Inhalt eines bestimmten Typs durch den Benutzer empfangen werden soll, wobei dieser Inhalt im Folgenden als "Originalinhalt" bezeichnet wird, wobei das Bestimmen (16) ein Prüfen von mindestens welchen von
Schicht-n-Steuerinformationen des Pakets, wobei n eine ganze Zahl größer oder gleich 3 ist; und
der durch Schicht-7-Steuerinformationen verkapselten Nutzdaten des Pakets umfasst;
wobei die Schichtebene im Sinne des Open System Interconnection-Referenzmodells zu verstehen ist; und
Einholen (18), wenn bestimmt wird, dass das Paket anzeigt, dass der Originalinhalt des bestimmten Typs durch den Benutzer empfangen werden soll, von Informationen bezüglich Operationen, die in Bezug auf den Originalinhalt ausgeführt werden sollen, basierend auf dem Profil des Benutzers und des bestimmten Typs des Originalinhalts,
**dadurch gekennzeichnet, dass**
die Informationen bezüglich Operationen, die in Bezug auf den Originalinhalt ausgeführt werden sollen, mindestens einen von
einem Hinweis auf Inhalt, der im Folgenden als "Ersatzinhalt" bezeichnet wird, zum Ersetzen des Originalinhalts,
einem Hinweis auf Inhalt, der im Folgenden als "zusätzlicher Inhalt" bezeichnet wird und zusätzlich zum Originalinhalt an den Benutzer gesendet werden soll; und
einem Hinweis auf Inhalt umfassen, der im Folgenden als "unerwünschter Inhalt" bezeichnet wird und bei Empfang von Paketen, die an den Benutzer gesendet werden sollen, gelöscht werden soll; und
wobei das Verfahren ferner umfasst:
Ausführen (20) der Operationen in Bezug auf den Originalinhalt,
wobei das Ausführen (20) der Operationen in Bezug auf den Originalinhalt mindestens eines von Folgendem umfasst:
Ersetzen (204) des Originalinhalts durch den Ersatzinhalt und Senden (205) des Ersatzinhalts an den Benutzer, wobei das Ersetzen (204) des Originalinhalts durch den Ersatzinhalt bei Empfangen (19) eines Pakets, das an den Benutzer gesendet werden soll, umfasst:
Identifizieren (204a) der durch Schicht-7-Steuerinformationen verkapselten Nutzdaten des Pakets; und
Ersetzen (204b) der identifizierten Nutzdaten durch Nutzdaten, die wenigstens einen Teil des Ersatzinhalts umfassen;
Hinzufügen (206) des zusätzlichen Inhalts zum Originalinhalt und Senden (207) sowohl des zusätzlichen Inhalts als auch des Originalinhalts an den Benutzer, wobei das Hinzufügen (206) des zusätzlichen Inhalts bei Empfangen (19) eines Pakets, das an den Benutzer gesendet werden soll, umfasst:
Identifizieren (206a) der durch Schicht-7-Steuerinformationen verkapselten Nutzdaten des Pakets; und
Hinzufügen (206b) von Nutzdaten, die wenigstens einen Teil des zusätzlichen Inhalts umfassen, in den identifizierten Nutzdaten; und
Entfernen (208) des unerwünschten Inhalts bei Empfangen von Paketen, die an den Benutzer gesendet werden sollen, wobei das Entfernen (208) des unerwünschten Inhalts bei Empfangen (19) eines Pakets, das an den Benutzer gesendet werden soll, umfasst:
Identifizieren (208a) der durch Schicht-7-Steuerinformationen verkapselten Nutzdaten des Pakets; und
Entfernen (208b) von Nutzdaten, die wenigstens einen Teil des unerwünschten Inhalts umfassen, aus den identifizierten Nutzdaten.

2. Verfahren nach Anspruch 1, wobei das Einholen (14) eines Profils des Benutzers ein Einholen (14) des Profils von einem Netzknoten (600) umfasst, der eine Richtlinien- und Abrechnungsregelfunktion umfasst.

3. Verfahren nach Anspruch 1 oder 2, wobei das Profil des Benutzers mindestens welche von
Informationen darüber, ob irgendwelche Operation in Bezug auf Originalinhalte im Allgemeinen für den Benutzer ausgeführt werden sollen; und
Informationen über Operationen umfasst, die in Bezug auf Originalinhalte eines oder mehrerer bestimmter Typen für den Benutzer ausgeführt werden sollen.

4. Verfahren nach Anspruch 1, 2 oder 3, wobei das Ausführen (20) der Operationen in Bezug auf den Originalinhalt ferner ein Abrufen (202) mindestens eines von dem Ersatzinhalt, dem zusätzlichen Inhalt und dem unerwünschten Inhalt aus einem Repository umfasst.

5. Verfahren nach einem der vorhergehenden Ansprüche, wobei das Ersetzen (204) des Originalinhalts durch den Ersatzinhalt umfasst:
Ersetzen der Nutzdaten in jedem einer Mehrzahl von Paketen durch Nutzdaten, welche Segmente des Ersatzinhalts umfassen.

6. Verfahren nach einem der vorhergehenden Ansprüche, wobei das Hinzufügen (206) des zusätzlichen Inhalts zum Originalinhalt umfasst:
Hinzufügen zu einem bestehenden Videoclip, das an einen Benutzer gesendet werden soll, einer Warnung, dass das Video für Kinder ungeeigneten Inhalt umfassen kann.

7. Verfahren nach einem der vorhergehenden Ansprüche, wobei das Einholen (18) von Informationen bezüglich Operationen, die in Bezug auf den Originalinhalt ausgeführt werden sollen, ferner auf einem Vergleichen einer URI (Uniform Resource Identifier) basiert.

8. Verfahren nach einem der vorhergehenden Ansprüche, wobei das Einholen (18) von Informationen bezüglich Operationen, die in Bezug auf den Originalinhalt ausgeführt werden sollen, ferner auf einem Erkennen basiert, dass entweder Audio oder Video angefordert wird.

9. Verfahren nach einem der vorhergehenden Ansprüche, wobei das Einholen (18) von Informationen bezüglich Operationen, die in Bezug auf den Originalinhalt ausgeführt werden sollen, ferner auf der Zeit und dem Datum basiert, zu welchen der Originalinhalt angefordert wird.

10. Netzknoten (500), der eine Richtlinien- und Abrechnungsdurchsetzungsfunktion (500') umfasst, wobei der Netzknoten (500) umfasst:
eine Einheit (512), die im Folgenden als "Benutzerebenensitzungs-Aufbaueinrichtung" (512) bezeichnet wird und zum Aufbauen einer Benutzerebenensitzung mit einem Benutzer (800) konfiguriert ist;
eine weitere Einheit (514), die im Folgenden als "Benutzerprofil-Einholeinrichtung" (514) bezeichnet wird und zum Einholen eines Profils des Benutzers konfiguriert ist;
eine weitere Einheit (516), die im Folgenden als "Bestimmungseinrichtung" (516) bezeichnet wird und zum Bestimmen konfiguriert ist, ob ein empfangenes Paket anzeigt, dass Inhalt eines bestimmten Typs durch den Benutzer empfangen werden soll, wobei dieser Inhalt im Folgenden als "Originalinhalt" bezeichnet wird, wobei das Bestimmen (16) ein Prüfen von mindestens welchen von
Schicht-n-Steuerinformationen des Pakets, wobei n eine ganze Zahl größer oder gleich 3 ist; und
der durch Schicht-7-Steuerinformationen verkapselten Nutzdaten des Pakets umfasst;
wobei die Schichtebene im Sinne des Open System Interconnection-Referenzmodells zu verstehen ist; und
eine weitere Einheit (518), die im Folgenden als "Operationsinformations-Einholeinrichtung" (518) bezeichnet wird und so konfiguriert ist, dass sie, wenn durch die Bestimmungseinrichtung (516) bestimmt wird, dass das Paket anzeigt, dass der Originalinhalt des bestimmten Typs durch den Benutzer empfangen werden soll, Informationen bezüglich Operationen, die in Bezug auf den Originalinhalt ausgeführt werden sollen, basierend auf dem Profil des Benutzers und dem bestimmten Typ des Originalinhalts einholt,
**dadurch gekennzeichnet, dass**
die Informationen bezüglich Operationen, die in Bezug auf den Originalinhalt ausgeführt werden sollen, mindestens einen von
einem Hinweis auf Inhalt, der im Folgenden als "Ersatzinhalt" bezeichnet wird, zum Ersetzen des Originalinhalts,
einem Hinweis auf Inhalt, der im Folgenden als "zusätzlicher Inhalt" bezeichnet wird und zusätzlich zum Originalinhalt an den Benutzer gesendet werden soll; und
einem Hinweis auf Inhalt umfassen, der im Folgenden als "unerwünschter Inhalt" bezeichnet wird und bei Empfang von Paketen, die an den Benutzer gesendet werden sollen, gelöscht werden soll; und
wobei der Netzknoten (500) ferner umfasst:
eine weitere Einheit (520), die im Folgenden als "Operationsausführeinrichtung" (520) bezeichnet wird und zum Ausführen der Operationen in Bezug auf den Originalinhalt konfiguriert ist,
wobei die Operationsausführeinrichtung (520) so konfiguriert ist, dass sie Operationen in Bezug auf den Originalinhalt durch mindestens eines von Folgendem ausführt:
Ersetzen des Originalinhalts durch den Ersatzinhalt und Senden des Ersatzinhalts an den Benutzer, wobei das Ersetzen des Originalinhalts durch den Ersatzinhalt bei Empfangen eines Pakets, das an den Benutzer gesendet werden soll, umfasst:
Identifizieren der durch Schicht-7-Steuerinformationen verkapselten Nutzdaten des Pakets; und
Ersetzen der identifizierten Nutzdaten durch Nutzdaten, die wenigstens einen Teil des Ersatzinhalts umfassen;
Hinzufügen des zusätzlichen Inhalts zum Originalinhalt und Senden sowohl des zusätzlichen Inhalts als auch des Originalinhalts an den Benutzer, wobei das Hinzufügen des zusätzlichen Inhalts bei Empfangen eines Pakets, das an den Benutzer gesendet werden soll, umfasst:
Identifizieren der durch Schicht-7-Steuerinformationen verkapselten Nutzdaten des Pakets; und
Hinzufügen von Nutzdaten, die wenigstens einen Teil des zusätzlichen Inhalts umfassen, in den identifizierten Nutzdaten; und
Entfernen des unerwünschten Inhalts bei Empfangen von Paketen, die an den Benutzer gesendet werden sollen, wobei das Entfernen (208) des unerwünschten Inhalts bei Empfangen eines Pakets, das an den Benutzer gesendet werden soll, umfasst:
Identifizieren der durch Schicht-7-Steuerinformationen verkapselten Nutzdaten des Pakets; und
Entfernen von Nutzdaten, die wenigstens einen Teil des unerwünschten Inhalts umfassen, aus den identifizierten Nutzdaten.

11. Netzknoten (500) nach Anspruch 10, wobei die Benutzerprofil-Einholeinrichtung (514) so konfiguriert ist, dass sie ein Profil des Benutzers wenigstens durch Einholen von einem Netzknoten (600) einholt, der eine Richtlinien- und Abrechnungsregelfunktion umfasst.

12. Netzknoten (500) nach Anspruch 10 oder 11, wobei das Profil des Benutzers mindestens welche von
Informationen darüber, ob irgendwelche Operation in Bezug auf Originalinhalte im Allgemeinen für den Benutzer ausgeführt werden sollen; und
Informationen über Operationen umfasst, die in Bezug auf Originalinhalte eines oder mehrerer bestimmter Typen für den Benutzer ausgeführt werden sollen.

13. Netzknoten (500) nach Anspruch 10, 11 oder 12, wobei die Operationsausführeinrichtung (520) so konfiguriert ist, dass sie die Operationen in Bezug auf den Originalinhalt wenigstens durch zusätzliches Abrufen mindestens eines von dem Ersatzinhalt, dem zusätzlichen Inhalt und dem unerwünschten Inhalt aus einem Repository (700) ausführt.

14. Computerprogrammprodukt, umfassend computerlesbare Anweisungen, die so konfiguriert sind, dass sie, wenn auf einen Netzknoten (500) ausgeführt, den Netzknoten (500) veranlassen, das Verfahren nach einem der Ansprüche 1 bis 9 auszuführen.

## Revendications

1. Procédé de contrôle de politique et de tarification mis en oeuvre par un noeud de réseau (500) comportant une fonction de mise en application de politique et de tarification (500'), le procédé comprenant :
l'établissement (12) d'une session de plan d'utilisateur avec un utilisateur (800) ;
l'obtention (14) d'un profil de l'utilisateur ;
la détermination (16) du fait de savoir si un paquet reçu indique qu'un contenu d'un type particulier doit être reçu par l'utilisateur, ce contenu étant désigné ci-après "contenu original", dans lequel la détermination (16) comprend l'inspection d'au moins l'une
d'une information de contrôle de couche n du paquet, où n est un entier supérieur ou égal à 3 ; et
de la charge utile du paquet encapsulée par une information de contrôle de couche 7 ;
dans lequel le niveau de la couche doit être considéré au sens du modèle de référence d'Interconnexion de Systèmes Ouverts ; et
s'il est déterminé que le paquet indique que le contenu original du type particulier doit être reçu par l'utilisateur, l'obtention (18), sur la base du profil de l'utilisateur et du type particulier du contenu original, d'une information concernant des opérations devant être effectuées en rapport avec le contenu original,
**caractérisé en ce que**
l'information concernant des opérations devant être effectuées en rapport avec le contenu original comprend au moins l'un
d'une référence à un contenu, désigné ci-après "contenu de substitution" devant remplacer le contenu original ;
d'une référence à un contenu, désigné ci-après "contenu supplémentaire" devant être envoyé à l'utilisateur en plus du contenu original ; et
d'une référence à un contenu, désigné ci-après "contenu indésirable", devant être supprimé lors de la réception de paquets devant être envoyés à l'utilisateur ; et
le procédé comprend en outre :
l'exécution (20) d'opérations en rapport avec le contenu original,
dans lequel l'exécution (20) des opérations en rapport avec le contenu original comprend au moins :
le remplacement (204) du contenu original par le contenu de substitution, et l'envoi (205) à l'utilisateur du contenu de substitution, dans lequel le remplacement (204) du contenu original par le contenu de substitution comprend, lors de la réception (19) d'un paquet devant être envoyé à l'utilisateur :
l'identification (204a) de la charge utile du paquet encapsulée par une information de contrôle de couche 7 ; et
le remplacement (204b) de la charge utile identifiée par une charge utile comportant au moins une partie du contenu de substitution ;
l'ajout (206), au contenu original, du contenu supplémentaire, et l'envoi (207) à l'utilisateur à la fois du contenu supplémentaire et du contenu original, dans lequel l'ajout (206) du contenu supplémentaire comprend, lors de la réception (19) d'un paquet devant être envoyé à l'utilisateur :
l'identification (206a) de la charge utile du paquet encapsulée par une information de contrôle de couche 7 ; et
l'ajout (206), dans la charge utile identifiée, d'une charge utile comportant au moins une partie du contenu supplémentaire ; et
l'élimination (208) du contenu indésirable lors de la réception de paquets devant être envoyés à l'utilisateur, dans lequel l'élimination (208) du contenu indésirable comprend, lors de la réception (19) d'un paquet devant être envoyé à l'utilisateur :
l'identification (208a) de la charge utile du paquet encapsulée par une information de contrôle de couche 7 ; et
l'élimination (208b), de la charge utile identifiée, d'une charge utile comportant au moins une partie du contenu indésirable.

2. Procédé selon la revendication 1, dans lequel l'obtention (14) d'un profil de l'utilisateur comprend l'obtention (14), en provenance d'un noeud du réseau (600) comportant une fonction de politique et de règles de tarification, du profil.

3. Procédé selon la revendication 1 ou 2, dans lequel le profil de l'utilisateur comporte au moins l'une
d'une information indiquant si, pour l'utilisateur, d'éventuelles opérations doivent être effectuées en rapport avec les contenus originaux en général ; et
d'une information concernant des opérations devant être effectuées, pour l'utilisateur, en rapport avec les contenus originaux d'un ou plusieurs types particuliers.

4. Procédé selon la revendication 1, 2 ou 3, dans lequel l'exécution (20) des opérations en rapport avec le contenu original consiste en outre à extraire (202), d'un référentiel (700), au moins l'un du contenu de substitution, du contenu supplémentaire et du contenu indésirable.

5. Procédé selon l'une quelconque des revendications précédentes, dans lequel le remplacement (204) du contenu original par le contenu de substitution comprend :
le remplacement de la charge utile dans chacun d'une pluralité de paquets par une charge utile comportant des segments du contenu de substitution.

6. Procédé selon l'une quelconque des revendications précédentes, dans lequel l'ajout (206), au contenu original, du contenu supplémentaire comprend :
l'ajout, à un extrait vidéo existant pouvant être envoyé à un utilisateur, d'un avertissement selon lequel la vidéo peut comporter un contenu inapproprié pour des enfants.

7. Procédé selon l'une quelconque des revendications précédentes, dans lequel l'obtention (18) d'une information concernant des opérations devant être exécutées en rapport avec le contenu original est en outre basée sur une concordance avec un Identifiant Uniforme de Ressource.

8. Procédé selon l'une quelconque des revendications précédentes, dans lequel l'obtention (18) d'une information concernant des opérations devant être exécutées en rapport avec le contenu original est en outre basée sur la détection du fait que soit de l'audio, soit de la vidéo est demandé.

9. Procédé selon l'une quelconque des revendications précédentes, dans lequel l'obtention (18) d'une information concernant des opérations devant être exécutées en rapport avec le contenu original est en outre basée sur l'heure et la date auxquelles le contenu original est demandé.

10. Noeud de réseau (500) comportant une fonction de mise en application de politique et de tarification (500'), le noeud de réseau (500) comportant :
une unité (512), désignée ci-après "dispositif d'établissement de session du plan utilisateur" (512), configurée pour établir une session de plan utilisateur avec un utilisateur (800) ;
une autre unité (514), désignée ci-après "dispositif d'obtention de profil d'utilisateur" (514), configurée pour obtenir un profil de l'utilisateur ;
une autre unité (516), désignée ci-après "dispositif de détermination" (516), configurée pour déterminer si un paquet reçu indique qu'un contenu d'un type particulier doit être reçu par l'utilisateur, ce contenu étant désigné ci-après "contenu original", dans lequel la détermination consiste à inspecter au moins l'une
d'une information de contrôle de couche n du paquet, où n est un entier supérieur ou égal à 3 ; et
de la charge utile du paquet encapsulée par une information de contrôle de couche 7 ;
dans lequel le niveau de la couche doit être compris au sens du modèle de référence d'Interconnexion de Systèmes Ouverts ; et
une autre unité (518), désignée ci-après "dispositif d'obtention d'informations d'opération" (518), configurée pour, s'il est déterminé par le dispositif de détermination (516) que le paquet indique que le contenu original du type particulier doit être reçu par l'utilisateur, obtenir, sur la base du profil de l'utilisateur et du type particulier du contenu original, une information concernant des opérations devant être exécutées en rapport avec le contenu original,
**caractérisé en ce que**
l'information concernant des opérations devant être exécutées en rapport avec le contenu original comporte au moins l'une
d'une référence à un contenu, désigné ci-après "contenu de substitution", devant remplacer le contenu original ;
d'une référence à un contenu, désigné ci-après "contenu supplémentaire", devant être envoyé à l'utilisateur en plus du contenu original ; et
d'une référence à un contenu, désigné ci-après "contenu indésirable", devant être supprimé lors de la réception de paquets devant être envoyés à l'utilisateur ; et
le noeud de réseau (500) comporte en outre :
une autre unité (520) désignée ci-après "dispositif d'exécution d'opérations" (520), configurée pour exécuter les opérations en rapport avec le contenu original,
dans lequel le dispositif d'exécution d'opération (520) est configuré pour exécuter les opérations en rapport avec le contenu original par au moins l'un :
d'un remplacement du contenu original par le contenu de substitution, et l'envoi, à l'utilisateur du contenu de substitution, dans lequel le remplacement du contenu original par le contenu de substitution comprend, lors de la réception d'un paquet devant être envoyé à l'utilisateur :
l'identification de la charge utile du paquet encapsulée par une information de contrôle de couche 7 ; et
le remplacement de la charge utile identifiée par une charge utile comportant au moins une partie du contenu de substitution ;
l'ajout, au contenu original, du contenu supplémentaire, et l'envoi à l'utilisateur à la fois du contenu supplémentaire et du contenu original, dans lequel l'ajout du contenu supplémentaire comprend, lors de la réception d'un paquet devant être envoyé à l'utilisateur :
l'identification de la charge utile du paquet encapsulée par une information de contrôle de couche 7 ; et
l'ajout, dans la charge utile identifiée, d'une charge utile comportant au moins une partie du contenu supplémentaire ; et
l'élimination du contenu indésirable lors de la réception de paquets devant être envoyés à l'utilisateur, dans lequel l'élimination (208) du contenu indésirable comprend, lors de la réception d'un paquet devant être envoyé à l'utilisateur,
l'identification de la charge utile du paquet encapsulée par une information de contrôle de couche 7 ; et
l'élimination, de la charge utile identifiée, d'une charge utile comportant au moins une partie du contenu indésirable.

11. Noeud de réseau (500) selon la revendication 10, dans lequel le dispositif d'obtention de profil d'utilisateur (514) est configuré pour obtenir un profil de l'utilisateur en obtenant au moins, d'un noeud de réseau (600), une fonction de politique et de règles de tarification.

12. Noeud de réseau (500) selon la revendication 10 ou 11, dans lequel le profil de l'utilisateur comporte au moins l'une :
d'une information indiquant si, pour l'utilisateur, d'éventuelles opérations doivent être exécutées en rapport avec des contenus originaux en général ; et
d'une information concernant des opérations devant être exécutées, pour l'utilisateur, en rapport avec les contenus originaux d'un ou plusieurs types particuliers.

13. Noeud de réseau (500) selon la revendication 10, 11 ou 12, dans lequel le dispositif d'exécution d'opérations (500) est configuré pour exécuter les opérations en rapport avec le contenu original en effectuant en outre au moins une extraction, à partir d'un référentiel (700), d'au moins l'un du contenu de substitution, du contenu supplémentaire et du contenu indésirable.

14. Programme informatique comportant des instructions lisibles par ordinateur configurées, lorsqu'elles sont exécutées sur un noeud de réseau (500) pour faire en sorte que le noeud de réseau (500) mette en oeuvre le procédé selon l'une quelconque des revendications 1 à 9.
